# EUROPEAN PATENT SPECIFICATION

(11) **EP 2 528 396 B1**
(45) Date of publication and mention of the grant of the patent: **16.07.2014**
(21) Application number: 11360020.9
(22) Date of filing: 27.05.2011
(51) Int. Cl.: H04W 52/02

(54) **Device control**
Gerätesteuerung
Commande de dispositif

(43) Date of publication of application: 28.11.2012
(73) Proprietor: Alcatel Lucent, 75007 Paris (FR)
(72) Inventor: Claussen, Holger, Straffan, Co Kildare (IE)
(74) Representative: Sarup, David Alexander

(56) References cited:
- WO-A1-2010/123573

## Description

### FIELD OF THE INVENTION

The present invention relates to a device controller, a method and a computer program product.

### BACKGROUND

Reducing power consumption of devices has become an important goal, both for meeting international obligations on omissions as well as making those devices more cost-effective to operate.

In some industries such as, for example, wireless telecommunications, a large amount of energy is consumed by components associated with high power transmission. Introducing small cells to complement macrocellular networks can significantly reduce the power associated with transmission due to the reduced path loss. This shifts the limiting factor on energy consumption from transmission to processing which becomes the dominating contribution to the overall energy consumption. Although techniques exist for reducing energy consumption when performing processing tasks, each of these individual approaches has their own limitations.

WO 2010/123573 A1 discloses a communication receiver which applies signal processing for quantitatively estimating received signal factors such as communication channel quality, signal characteristics and overall system received bit error rate or packet error rate, and which applies a general algorithm for mapping these estimated factors to control receiver performance and minimise power consumption.

Accordingly, it is desired to provide additional techniques for controlling devices.

### SUMMARY

According to a first aspect, there is provided a device controller as claimed in claim 1.

The first aspect recognises that whilst existing techniques contribute to reducing power consumption, each can only produce finite, limited savings and so additional techniques for reducing power consumption are required. For example, whilst work has been undertaken on reducing the size of devices and, in particular, of chip structures, these gains are diminishing due to physical limitations. Also, although work has been undertaken on reducing the complexity of processing algorithms, again the gains in this area are diminishing. Furthermore, although work has been undertaken on reducing power consumption when microprocessors are idle, this does not reduce power consumption under load. The first aspect therefore recognises the need to provide additional techniques which further reduce power consumption.

The first aspect also recognises that typically most existing devices are powered when processing data with a supply voltage which is set such that a sufficient margin over noise occurs in order to achieve a near zero error processing probability. That is to say that the supply voltage is set so that the device operates determinatively and consistently with a statistically very low probability of a random error in the resultant data due largely to the presence of noise occurring. This margin in the supply voltage level needs to take account of manufacturing tolerances and operating conditions such as, for example, operating temperatures. The margin also needs to account for ageing of the device. However, the first aspect recognises that if the zero error probability requirement is relaxed, which reduces the size of the margin, then the power consumption of the device can be reduced considerably.

Accordingly, a device controller is provided. The device controller may comprise a voltage controller which may provide a supply voltage to a device which receives data and which produces resultant data. Error rate control logic may be provided which receives an indication of a target error rate of resultant data to be provided by the device. The error rate logic may also refer to error rate characteristic data which provides error rates of the resultant data when operating the device at different values of the supply power and from this error rate characteristic data determines a value of supply power to be supplied to the device which achieves the target error rate in the resultant data. The error rate control logic may provide an indication of that value of supply voltage to the voltage controller to supply the value of the supply voltage to the device.

A consequence of relaxing the near zero error probability means that the resultant data is likely to contain errors as a consequence. However, in many applications, the existence of errors in the resultant data may well be acceptable and, in some circumstances such as where error detection or error correction of the resultant data is possible, the existence of errors in the resultant data may not affect the overall performance of the device. Hence, it becomes possible to determine an acceptable level of error in the resultant data which can readily be accommodated and to reduce the supply voltage of the device to a level which may cause the introduction of that degree of error into the resultant data.

In one embodiment, the voltage controller is operable to provide a supply voltage to the device operable to provide the resultant data over a transmission channel and the error rate control logic is operable to receive an indication of a target error rate for resultant data provided by the device over the transmission channel and to determine a value of the supply voltage for the device which achieves the target error rate of resultant data provided by the device over the transmission channel. Accordingly, rather than simply determining the error rate of the device itself, it is possible to determine an error rate which may occur as a result of the device providing the resultant data over a transmission channel which may also introduce further errors. Typically, it will be appreciated that the errors introduced by the transmission channel may be proportional to the supply voltage of the device performing such transmission which affects the power of the transmission by the device over the transmission channel.

In one embodiment, the error rate control logic is operable to determine a minimum value of the supply voltage which achieves the target error rate. Hence, the error rate control logic may determine the smallest value of supply voltage which achieves the target error rate, thereby minimising power consumption.

In one embodiment, the voltage controller is operable to provide a supply voltage to a plurality of devices and the error rate control logic is operable to receive an indication of a target error rate for resultant data provided by the plurality of devices and to determine a value of the supply voltage for each of the plurality of devices which achieves the target error rate. Hence, rather than optimizing the supply voltage to each of the devices separately, a target error rate for the resultant data produced by all of the devices may be received and a determination made of the supply voltage for each of those devices which achieves the target error rate for the overall resultant data provided by the devices. It will be appreciated that this approach may enhance reductions in power consumption since there may be a first set of devices which consume very little power but introduce high error rates when the supply voltage is reduced, whereas a second set of devices may consume high amounts of power and may contribute very little to the error rate when their voltage supply is reduced. In those circumstances, it makes sense to reduce the supply voltage of the second set of devices than the first set of devices.

In one embodiment, the voltage controller is operable to provide a supply voltage to a plurality of sequential devices, each sequential device providing resultant to a following sequential device, and the error rate control logic is operable to receive an indication of a target error rate for resultant data provided by the plurality of sequential devices and to determine a value of the supply voltage for each of the plurality of sequential devices which achieves the target error rate. Accordingly, an overall target error rate may be received for res ultant data provided by a sequence of devices and a supply voltage set for each of the devices in the sequence. Typically, each device in the sequence will receive the resultant data from a device earlier in the sequence and provide its resultant data to a device which is next in the sequence. Again, by optimizing the supply voltage across the devices in the sequence in order to achieve an overall target error rate, further trade-offs in power consumption between the devices can be made to enhance reduction in power consumption.

In one embodiment, the voltage controller is operable to determine a value of the supply voltage for each of the plurality of devices which achieves the target error rate and minimises power consumption of the plurality of devices.

In one embodiment, the error rate characteristic data provides error rates when operating the device at different values of the supply voltage under different conditions.

In one embodiment, the error rate characteristic data provides error rates when operating the device at different values of the supply voltage at different temperatures. It will be appreciated that temperature is likely to be the most significant operating condition which contributes to noise and the raising of the error rate. By maintaining error rate characteristic data at different temperatures a more accurate indication of the likely error rate at any supply voltage can be assessed. It will be appreciated that should no data exist for a particular temperature, then the error rate characteristic data of different temperatures may be interpolated or extrapolated to estimate the error rate at the current operating temperature of the device. It will be appreciated that this error rate characteristic data may be stored in a variety of different ways, such as by look-up tables or by an equation or algorithm which describes the relationship between error rate and supply voltage under different conditions.

The device controller comprises error rate characteristic determining logic operable to determine the error rate characteristic data by providing data to the device at different values of the supply voltage and identifying an error rate of resultant data for the different values of the supply voltage. Accordingly, error rate characteristic data for each device may be obtained. Such an approach helps to ensure that the supply voltage is self-optimized for each device individually, which removes the margin that would otherwise be required to account for manufacturing tolerances and ageing.

In one embodiment, the error rate characteristic determining logic is operable to determine the error rate characteristic data by providing a plurality of data to the device and identifying an error rate by comparing each of a corresponding plurality of resultant data provided by the device. Accordingly, a plurality of sets of data may be provided to the device and each of the corresponding sets of resultant data may be compared to identify an error rate at a particular supply voltage. Such data may even be actual data supplied to the device for processing; it is not necessary to know what the correct resultant data is, since all that is required is to determine the rate of errors of the sets of resultant data and this can be inferred by comparing each of those sets of resultant data since, if they differ, then an error must have occurred.

In one embodiment, the error rate characteristic determining logic is operable to determine the error rate characteristic data by providing predetermined data to the device and identifying an error rate by comparing resultant data provided by the device with predetermined resultant data. Accordingly, pre-defined data may be provided to the device and the resultant data compared with pre-defined resultant data in order to determine the error rate at that supply voltage.

In one embodiment, the error rate characteristic determining logic is operable to determine the error rate characteristic data at different temperatures.

In one embodiment, the error rate characteristic determining logic is operable to determine the error rate characteristic data during periods when the device is otherwise inactive. Accordingly, it may be possible to calibrate the error rate characteristic data by interleaving this task with other processing tasks being performed by the device. Again, by regularly calibrating the error rate characteristic data, any changes in the error rate of the device can be detected and the supply voltage adjusted accordingly.

According to a second aspect, there is provided a method of controlling a device, as claimed in claim 12.

In one embodiment, the step of receiving comprises receiving an indication of a target error rate for resultant data provided by the device over a transmission channel and the step of determining comprises determining a value of the supply voltage for the device which achieves the target error rate of resultant data provided by the device over the transmission channel.

In one embodiment, the step of determining comprises determining a minimum value of the supply voltage which achieves the target error rate.

In one embodiment, the step of receiving comprises receiving an indication of a target error rate for resultant data provided by a plurality of devices and the step of determining comprises determining a value of the supply voltage for each of the plurality of devices which achieves the target error rate.

In one embodiment, the step of receiving comprises receiving an indication of a target error rate for resultant data provided by a plurality of sequential devices, each sequential device providing resultant to a following sequential device, and the step of determining comprises determining a value of the supply voltage for each of the plurality of sequential devices which achieves the target error rate.

In one embodiment, the step of determining comprises determining a value of the supply voltage for each of the plurality of devices which achieves the target error rate and minimises power consumption of the plurality of devices.

In one embodiment, the error rate characteristic data provides error rates when operating the device at different values of the supply voltage under different conditions.

In one embodiment, the error rate characteristic data provides error rates when operating the device at different values of the supply voltage at different temperatures.

The method comprises the step of determining the error rate characteristic data by providing data to the device at different values of the supply voltage and identifying an error rate of resultant data for the different values of the supply voltage.

In one embodiment, the step of determining comprises determining the error rate characteristic data by providing a plurality of data to the device and identifying an error rate by comparing each of a corresponding plurality of resultant data provided by the device.

In one embodiment, the step of determining comprises determining the error rate characteristic data by providing predetermined data to the device and identifying an error rate by comparing resultant data provided by the device with predetermined resultant data.

In one embodiment, the step of determining comprises determining the error rate characteristic data at different temperatures.

In one embodiment, the step of determining comprises determining the error rate characteristic data during periods when the device is otherwise inactive.

According to a third aspect, there is provided a computer program product operable, when executed on a computer, to perform the method steps of the second aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates an example arrangement of a device controller according to one embodiment;
Figure 2 illustrates the operation of the device controller of Figure 1 when trying to achieve a target frame error rate;
Figure 3 illustrates the use of device controllers when controlling multiple function blocks; and
Figure 4 illustrates the use of a device controller when controlling multiple function blocks.

### DESCRIPTION OF THE EMBODIMENTS

### Overview

Before discussing the embodiments in any detail, first an overview will be provided. Many different devices which receive data and either then transmit data or store data for subsequent use, or which process or manipulate the received data to produce data for storage or transmission, receive a supply voltage by which the device is powered. Typically, energy consumed in a device is related to the supply voltage V and its resistance R as power P=V²/R. As a result, decreasing the supply voltage can make a significant difference in power consumption.

However, as mentioned above, in order to enable data to be produced or stored reliably, the supply voltage is typically set such that a sufficient margin over noise is achieved in order that a near zero error probability in the resultant data is achieved. The margin helps to account for manufacturing tolerances and variations in operating temperatures, or other operating conditions, which may affect the level of noise.

Embodiments recognise that by relaxing the zero error probability requirement, the margin over noise requirement reduces and the voltage may be self-optimised for each device individually (which removes the margin set for manufacturing tolerances and temperature variations). This means that the power consumption of the device can be reduced considerably.

However, it will be appreciated that by operating the devices in this way, the probability of errors occurring in the resultant data will increase. Accordingly, careful account may need to be taken of the likelihood of errors occurring in resultant data. Devices running software which would be sensitive to processing errors (which may, for example, result in a crash of a program) may need to be treated differently from those devices which only produce a wrong result when a processing error occurs but which can otherwise continue to function. Therefore, this approach to power control may need to distinguish between those parts of an apparatus and may need to set a constant near zero error probability for those devices which are sensitive to such errors.

Despite this there are many devices that may not be sensitive to data errors. Examples of such devices are direct hardware implementations or software implementations that can detect or recover from processing errors. Most of the functionality of current communication chips or processors typically belongs to this category. Also, devices which process data which has some error identification or error correction capability, such as error correction codes or data integrity checking, are likely to be more robust to the introduction of such errors. Hence, it will be appreciated that this approach is particularly well suited for communication systems where the receiver and transmitter processing requires a large amount of computation for detection and encoding or decoding, particularly where more complex and advanced algorithms are used, such as Multiple In Multiple Out (MIMO) detection, or interference cancellation.

In order to utilise such power control, a two-stage process is envisaged. First, error probability curves as a function of supply voltage are automatically detected for each device. These provide an indication of the likely or expected error rate when operating at different supply voltages. Different curves may also be provided for the device when operating under different conditions such as, for example, different temperatures.

From these error probability curves, it is then possible to calculate optimal supply voltages for different devices. Typically, this determination is made based on receiving a target error rate for the devices: This approach helps to minimise the power consumed for any particular target error rate.

### Error Probability Curve Determination

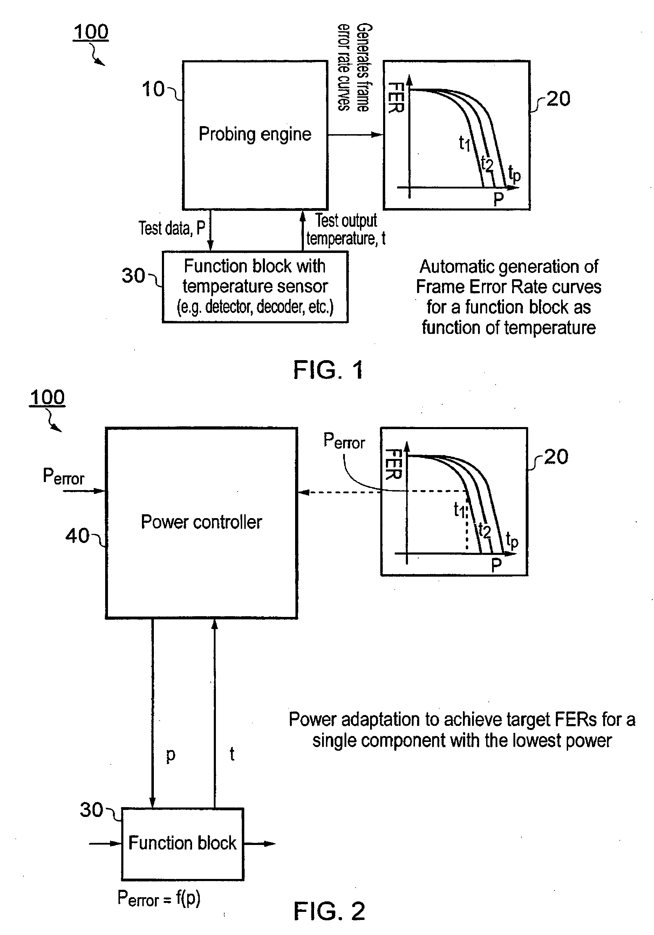

Figure 1 shows an example arrangement of a device controller 100 according to one embodiment having a probing engine 10 which incorporates error rate characteristic determining logic which determines the error rate probability curves 20 for each function block 30 or device (feature of the power controller described below have been omitted to improve clarity). The probing engine 10 determines the error probability curves 20 as a function of supply voltage and, optionally, as a function of temperature t₁ - t₃.

In one approach the probing engine 10 iteratively feeds the function block 30 with a known test sequence to determine the error rate (in this case, a block or frame error probability) for different voltage or power settings. The resultant data can then be compared with known resultant data to determine the error rate.

In another approach the probing engine 10, rather than providing the function block 30 with a known test sequence, instead requests the function block 30 to re-process previously processed data such as a previous block or frame of data and compare the resultant data output with the previous resultant data output. If the resultant data is consistent, then there is no error. However, if the resultant data has differences, then errors have occurred. In particular, it is possible to determine the error rate by reprocessing the same data multiple times and determining the number of instances of resultant data having an error.

When operating at a higher supply voltage, the processing the data a thousand times may result in none of the resultant data having any errors. However, if the supply voltage was reduced to a proportion of the previous higher supply voltage and the data was processed a thousand times again, then a greater instance of the resultant data having errors may be observed.

In this example, error probability curves 20 for different operating temperatures t₁ - t₃ of the function block 30 reported by a temperature sensor on function block 30 are also derived. The determination and adjustment of the error probability curves 20 can be performed periodically during operation between receipt of real data blocks by the function block 30. This enables the error probability curves 20 to be adjusted to account for ageing, changes in temperature or changes in other operating conditions.

It will be appreciated that the error probability curves 20 can be provided as data points in a look-up table or may be completely or partially provided as equations which describe the error probability curves 20.

### Supply Voltage Determination -Single Device

Figure 2 illustrates the operation of the device controller 100 when trying to achieve a target frame error rate (features of the probing engine 10 have been omitted to improve clarity). Although these embodiments refer to the use of a frame error rate, it will be appreciated that other error rates or a block error rate may equally be used.

A voltage or power controller 40 is provided which receives a target frame error rate Pₑᵣᵣₒᵣ to be achieved by the function block 30. The power controller 40 optionally determines the temperature of the function block 30 and refers to a matching error probability curve 20 for that temperature. If no matching error probability curve 20 exists, then extrapolation or interpolation techniques may be used to provide an estimated error probability curve 20 for that temperature. The power controller 40 determines from the error probability curve 20 the minimum power p to be supplied to the function block 30 which achieves the target frame error rate Pₑᵣᵣₒᵣ at that temperature. In this way it can be seen that the power consumption of the function block 30 may be reduced when a particular frame error rate is acceptable.

### Supply Voltage Determination-Multiple Devices -Example 1

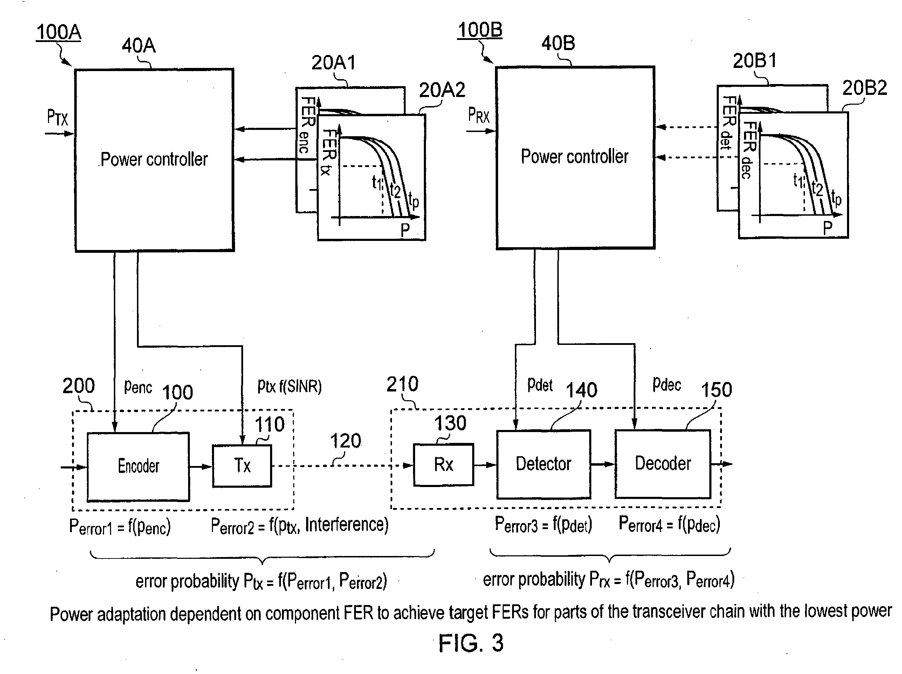

Figure 3 illustrates the use of device controllers 100A, 100B when controlling multiple function blocks. In this example, two device controllers 100A, 100B are provided, each of which controls multiple function blocks. In particular, one device controller 100A controls multiple function blocks in a transmitter 200, whilst one device controller 100B controls multiple function blocks in a receiver 210.

A first power controller 40A is coupled with the transmitter 200 which includes an encoder 100 and a transmission device 110 that transmits data over a channel 120. A second power controller 40B is coupled with the receiver 210 which also has multiple function blocks. In this example, the receiver has a receiving device 130, a detector 140 and a decoder 150. Also provided are probing engines (not shown) which determine the error probability curves 20A 1, 20A2, 20B1, 20B2 for each of the function blocks in the same manner as that described above.

This approach enables the power controller 40A, 40B to optimise the power separately in the transmitter 200 and the receiver 210 to achieve a predetermined target frame error rate in both the transmitter 200 and the receiver 210. For example, the power controller 40A may receive a target frame error rate Pₜₓ for the transmitter 200. Likewise, the power controller 40B may receive a target frame error rate Pᵣₓ for the receiver 210. The power controller 40A determines from the frame error rate curves 20A1, 20A2 for each function block 100, 110 the amount of power to be supplied to that function block by varying, for example, its supply voltage. From this, it is possible to determine a supply voltage for each functional block 100, 110 which minimises power consumption of the transmitter 200. For example, it may be that a very small reduction in supply voltage to the transmission device 110 results in a large increase in frame error rate, whereas a large decrease in supply voltage to the encoder 100 results in a small increase in frame error rate. In those circumstances, it will be appreciated that more power can be saved by causing a greater reduction in supply voltage to the encoder 100, rather than the transmitter 110. The power controller 40B will perform a similar process to minimise the power consumption of the receiver 210.

It will be appreciated that the transmission channel 120 will also add to the frame error rate and this will be a function of the transmission power of the transmission device 110 and the signal to interference plus noise ratio (SINR) of the channel 120 and accounted for by the frame error rate curve 20A2 of the transmission device 120. It will be appreciated that the error contribution made by the channel 120 could instead be accounted for by the frame error rate curve 20B1 of the detector 140 which may also include an error rate based on the sensitivity of the receiver 130.

An advantage of this approach is that rather than each function block optimising its power consumption selfishly, trade-offs between the function blocks can be made in order to minimise overall power consumption in each of the transmitter 200 and the receiver 210 for any particular error rate. However, a disadvantage of this approach is that such optimisations between the transmitter 200 and receiver 210 cannot be made.

### Supply Voltage Determination-Multiply Devices-Example 2

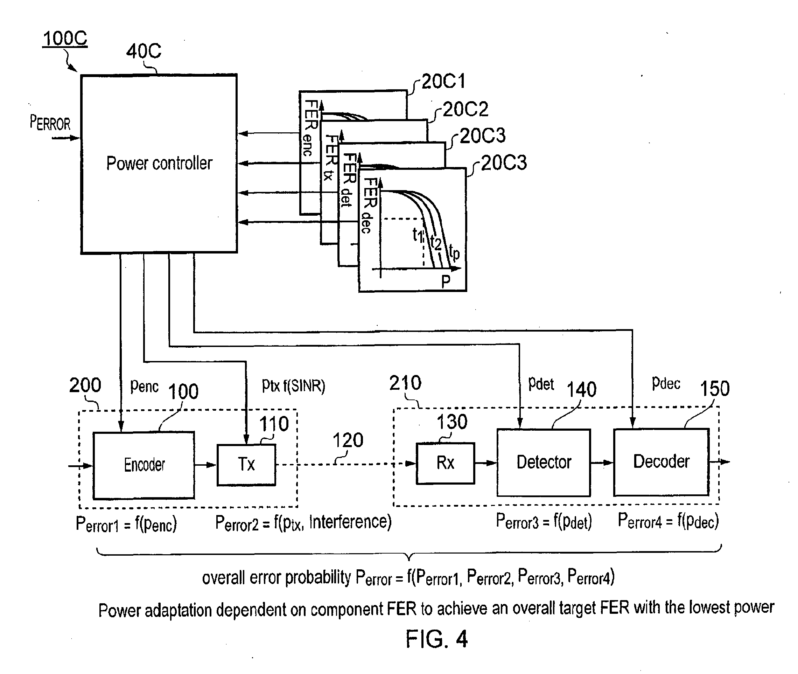

Figure 4 illustrates an arrangement where a single device controller 100C is operable to control the power of each of the function blocks in the transmitter 200 and the receiver 210.

A power controller 40C is coupled with the transmitter 200 which includes an encoder 100 and a transmission device 110 that transmits data over a channel 120. The power controller 40C is also coupled with the receiver 210 which also has multiple function blocks. In this example, the receiver has a receiving device 130, a detector 140 and a decoder 150. Also provided are probing engines (not shown) which determine the error probability curves 20C1, 20C2, 20C3, 20C4 for each of the function blocks in the same manner as that described above.

This approach enables the power controller 40C to optimise the power for both the transmitter 200 and the receiver 210 to achieve a predetermined target frame error rate across both the transmitter 200 and the receiver 210. For example, the power controller 40C may receive a target frame error rate Pₑᵣᵣₒᵣ for the transmitter 200 and receiver 210 pair. The power controller 40C determines from the frame error rate curves 20C1, 20C2, 20C3, 20C4 for each function block 100, 110, 130, 140, 150 the amount of power to be supplied to that function block by varying, for example, its supply voltage. From this, it is possible to determine a supply voltage for each functional block 100, 110, 130, 140, 150 which minimises power consumption of both the transmitter 200 and the receiver 210. For example, it may be that a very small reduction in supply voltage to function blocks of the transmitter 200 results in a large increase in frame error rate, whereas a large decrease in supply voltage to function blocks of the receiver 210 results in a small increase in frame error rate. In those circumstances, it will be appreciated that more power can be saved by causing a greater reduction in supply voltage to the receiver 210, rather than the transmitter 200.

As mentioned above, it will be appreciated that the transmission channel 120 will also add to the frame error rate and this will be a function of the transmission power of the transmission device 110 and the signal to interference plus noise ratio (SINR) of the channel 120 and accounted for by the frame error rate curve 20C2 of the transmission device 120. It will be appreciated that the error contribution made by the channel 120 could instead be accounted for by the frame error rate curve 20C3 of the detector 140 which may also include an error rate based on the sensitivity of the receiver 130.

It will be appreciated that this approach helps to further optimise power consumption by avoiding the transmission device and the receiving device both selfishly attempting to optimise power consumption in isolation. Instead, trade-offs between the function blocks along the complete processing chain can be made in order to minimise overall power consumption for any particular error rate. However, this approach requires communication between the power controller and the function blocks which may increase communications overhead between these often separated devices.

Accordingly, it can be seen that embodiments enable a reduction in the energy consumption of processing in, for example, telecommunications equipment. It will be appreciated that processing is typically the main contribution to the overall energy consumption of small cell networks and also of fixed line communication equipment such as switches, routers and the like. This approach is therefore broadly applicable to communication systems of all kinds, as well as other processing apparatus.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A device controller (100; 100A; 100B; 100C), comprising:
a voltage controller (40; 40A; 40B; 40C) operable to provide a supply voltage to a device (30; 200; 210) operable to receive data and to provide resultant data;
error rate control logic (40; 40A; 40B; 40C) operable to receive an indication of a target error rate (P_{ERROR}; P_{TX}; P_{RX}) of resultant data to be provided by said device, to determine a value of said supply voltage based on said target error rate by reference to error rate characteristic data (20) providing error rates when operating said device at different values of supply voltage and to provide an indication of said value of said supply voltage to said voltage controller to supply said value of said supply voltage to said device; and
error rate characteristic determining logic (10) operable to determine said error rate characteristic data by providing data to said device at different values of said supply voltage and identifying an error rate of resultant data for said different values of said supply voltage.

2. The device controller of claim 1, wherein said voltage controller is operable to provide a supply voltage to said device operable to provide said resultant data over a transmission channel and said error rate control logic is operable to receive an indication of a target error rate for resultant data provided by said device over said transmission channel and to determine a value of said supply voltage for said device which achieves said target error rate of resultant data provided by said device over said transmission channel.

3. The device controller of claim 1 or 2, wherein said error rate control logic is operable to determine a minimum value of said supply voltage which achieves said target error rate.

4. The device controller of any preceding claim, wherein said voltage controller is operable to provide a supply voltage to a plurality of devices (100-150) and said error rate control logic is operable to receive an indication of a target error rate for resultant data provided by said plurality of devices and to determine a value of said supply voltage for each of said plurality of devices which achieves said target error rate.

5. The device controller of any preceding claim, wherein said voltage controller is operable to provide a supply voltage to a plurality of sequential devices (100-150), each sequential device providing resultant to a following sequential device, and said error rate control logic is operable to receive an indication of a target error rate for resultant data provided by said plurality of sequential devices and to determine a value of said supply voltage for each of said plurality of sequential devices which achieves said target error rate.

6. The device controller of claim 4 or 5, wherein said voltage controller is operable to determine a value of said supply voltage for each of said plurality of devices which achieves said target error rate and minimises power consumption of said plurality of devices.

7. The device controller of any preceding claim, wherein said error rate characteristic data provides error rates when operating said device at different values of said supply voltage at different temperatures.

8. The device controller of claim 1, wherein said error rate characteristic determining logic is operable to determine said error rate characteristic data by providing a plurality of data to said device to reprocess previously processed data and identifying an error rate by comparing each of a corresponding plurality of resultant data provided by said device.

9. The device controller of claim 1, wherein said error rate characteristic determining logic is operable to determine said error rate characteristic data by providing predetermined data to said device and identifying an error rate by comparing resultant data provided by said device with predetermined resultant data.

10. The device controller of and one of claims 2 to 9, wherein said error rate characteristic determining logic is operable to determine said error rate characteristic data at different temperatures.

11. The device controller of and one of claims 1 to 10, wherein said error rate characteristic determining logic is operable to determine said error rate characteristic data during periods when said device is otherwise inactive.

12. A method of controlling a device, comprising the steps of:
receiving an indication of a target error rate of resultant data to be provided by said device in response to received data;
determining a value of a supply voltage provided to said device based on said target error rate by referencing error rate characteristic data providing error rates when operating said device at different values of supply voltage;
supplying said value of said supply voltage to said device; and
determining said error rate characteristic data by providing data to said device at different values of said supply voltage and identifying an error rate of resultant data for said different values of said supply voltage.

13. A computer program product operable, when executed on a computer, to perform the method steps of claim 12.

## Patentansprüche

1. Vorrichtungssteuerung (100; 100A; 100B; 100C), umfassend:
Einen Spannungsregler (40; 40A; 40B; 40C), betreibbar für die Bereitstellung einer Versorgungsspannung an eine Vorrichtung (30; 200; 210), welche für den Empfang von Daten und das Bereitstellen der resultierenden Daten betreibbar ist;
Fehlerratensteuerungslogik (40; 40A; 40B; 40C), betreibbar für den Empfang einer Angabe einer Ziel-Fehlerrate (P_{ERROR}; P_{TX}; P_{RX}) der resultierenden von der besagten Vorrichtung bereitzustellenden Daten, für die Ermittlung eines Wertes der besagten Versorgungsspannung auf der Basis der besagten Ziel-Fehlerrate unter Bezugnahme auf Fehlerrateneigenschaftsdaten (20), welche Fehlerraten bereitstellen, wenn die besagte Vorrichtung bei unterschiedlichen Versorgungsspannungswerten betrieben wird, und für die Bereitstellung einer Angabe des besagten Wertes der besagten Versorgungsspannung an den besagten Spannungsregler, um den besagten Wert der besagten Versorgungsspannung an die besagte Vorrichtung bereitzustellen; und
Fehlerrateneigenschaftsermittlungslogik (10), betreibbar für die Ermittlung der besagten Fehlerrateneigenschaftsdaten durch Bereitstellen von Daten bei unterschiedlichen Werten der besagten Versorgungsspannung an die besagte Vorrichtung und Identifizieren einer Fehlerrate von resultierenden Daten für die besagten unterschiedlichen Werte der besagten Versorgungsspannung.

2. Vorrichtungssteuerung nach Anspruch 1, wobei der besagte Spannungsregler für die Bereitstellung einer Versorgungsspannung an die besagte Vorrichtung, welche betreibbar ist, um die besagten resultierenden Daten über einen Übertragungskanal bereitzustellen, betreibbar ist, und wobei die besagte Fehlerratensteuerungslogik für den Empfang einer Angabe einer Ziel-Fehlerrate für die von der besagten Vorrichtung über den besagten Übertragungskanal bereitgestellten resultierenden Daten und für die Ermittlung eines Wertes der besagten Versorgungsspannung für die besagte Vorrichtung, welche die besagte Ziel-Fehlerrate der von der besagten Vorrichtung über den besagten Übertragungskanal bereitgestellten resultierenden Daten erreicht, betreibbar ist.

3. Vorrichtungssteuerung nach Anspruch 1 oder 2, wobei die besagte Fehlerratensteuerungslogik für die Ermittlung eines Mindestwertes der besagten Versorgungsspannung, welche die besagte Ziel-Fehlerrate erreicht, betreibbar ist.

4. Vorrichtungssteuerung nach einem beliebigen der verstehenden Ansprüche, wobei der besagte Spannungsregler betreibbar ist, um eine Versorgungsspannung an eine Vielzahl von Vorrichtungen (100-150) bereitzustellen, und wobei die besagte Fehlerratensteuerungslogik betreibbar ist, um eine Angabe einer Ziel-Fehlerrate für die von der besagten Vielzahl von Vorrichtungen bereitgestellten resultierenden Daten zu empfangen und einen Wert der besagten Versorgungsspannung für eine jede der besagten Vielzahl von Vorrichtungen, welche die besagte Ziel-Fehlerrate erreicht, zu ermitteln.

5. Vorrichtungssteuerung nach einem beliebigen der vorstehenden Ansprüche, wobei der besagte Spannungsregler für die Bereitstellung einer Versorgungsspannung an eine Vielzahl von Ablaufvorrichtungen (100-150) betreibbar ist, wobei jede Ablaufvorrichtung die resultierenden Daten an eine nächstfolgende Ablaufvorrichtung bereitstellt, und wobei die besagte Fehlerratensteuerungslogik betreibbar ist, um eine Angabe einer Ziel-Fehlerrate für die von der besagten Vielzahl von Ablaufvorrichtungen bereitgestellten resultierenden Daten zu empfangen und einen Wert der besagten Versorgungsspannung für eine jede der besagten Vielzahl von Ablaufvorrichtungen, welche die besagte Ziel-Fehlerrate erreicht, zu ermitteln.

6. Vorrichtungssteuerung nach Anspruch 4 oder 5, wobei der besagte Spannungsregler für die Ermittlung eines Wertes der besagten Versorgungsspannung für eine jede der besagten Vielzahl von Vorrichtungen, welche die besagte Ziel-Fehlerrate erreicht, betreibbar ist und die Leistungsaufnahme der besagten Vielzahl von Vorrichtungen minimiert.

7. Vorrichtungssteuerung nach einem beliebigen der vorstehenden Ansprüche, wobei die besagten Fehlerrateneigenschaftsdaten Fehlerdaten bereitstellen, wenn die besagte Vorrichtung bei unterschiedlichen Werten der besagten Versorgungsspannung bei unterschiedlichen Temperaturen betrieben wird

8. Vorrichtungssteuerung nach Anspruch 1, wobei die besagte Fehlerrateneigenschaftsermittlungslogik für die Ermittlung der besagten Fehlerrateneigenschaftsdaten durch Bereitstellen einer Vielzahl von Daten an die besagte Vorrichtung, um zuvor verarbeitete Daten erneut zu verarbeiten, und Identifizieren einer
Fehlerrate durch Vergleichen aller einer entsprechenden Vielzahl von durch die besagte Vorrichtung bereitgestellten resultierenden Daten betreibbar ist.

9. Vorrichtungssteuerung nach Anspruch 1, wobei die besagte Fehlerrateneigenschaftsermittlungslogik für die Ermittlung der besagten Fehlerrateneigenschaftsdaten durch Bereitstellen von vorbestimmten Daten an die besagte Vorrichtung und Identifizieren einer Fehlerrate durch Vergleichen der von der besagten Vorrichtung bereitgestellten resultierenden Daten mit vorbestimmten resultierenden Daten betreibbar ist.

10. Vorrichtungssteuerung nach einem beliebigen der Ansprüche 2 bis 9, wobei die besagte Fehlerrateneigenschaftsennittlungslogik für die Ermittlung der besagten Fehlerrateneigenschaftsdaten bei unterschiedlichen Temperaturen betreibbar ist

11. Vorrichtungssteuerung nach einem beliebigen der Ansprüche 1 bis 10, wobei die besagte Fehlerrateneigenschaftsermittlungslogik für die Ermittlung der besagten Fehlerrateneigenschaftsdaten während Zeitabschnitten, in denen die besagte Vorrichtung anderweitig inaktiv ist, betreibbar ist.

12. Verfahren zur Steuerung einer Vorrichtung, die folgenden Schritte umfassend:
Empfangen einer Angabe einer Ziel-Fehlerrate der von der besagten Vorrichtung in Reaktion auf empfangene Daten bereitzustellenden resultierenden Daten;
Ermitteln eines Wertes einer an die besagte Vorrichtung bereitgestellten Versorgungsspannung auf der Basis der besagten Ziel-Fehlerrate durch Referenzieren von Fehlerrateneigenschaftsdaten, welche Fehlerraten bereitstellen, wenn die besagte Vorrichtung bei unterschiedlichen Versorgungsspannungswerten betrieben wird;
Bereitstellen des besagten Versorgungsspannungswertes an die besagte Vorrichtung; und
Ermitteln der besagten Fehlerrateneigenschaftsdaten durch Bereitstellen von Daten an die besagte Vorrichtung bei unterschiedlichen Werten der besagten Versorgungsspannung und Identifizieren einer Fehlerrate der resultierenden Daten für die besagten unterschiedlichen Werte der besagten Versorgungsspannung.

13. Computerprogramm-Produkt, welches betreibbar ist, um bei dessen Ausführung auf einem Computer die Verfahrensschritte gemäß Anspruch 12 durchzuführen.

## Revendications

1. Contrôleur de dispositif (100 ; 100A ; 100B ; 100C), comprenant :
un régulateur de tension (40 ; 40A ; 40B ; 40C) permettant de fournir une tension d'alimentation à un dispositif (30 ; 200 ; 210) permettant de recevoir des données et de fournir des données résultantes ;
une logique de commande de taux d'erreur (40 ; 40A ; 40B ; 40C) permettant de recevoir une indication d'un taux d'erreur cible (P_{ERROR} ; P_{TX} ; P_{RX}) de données résultantes devant être fournies par ledit dispositif, pour déterminer une valeur de ladite tension d'alimentation en fonction dudit taux d'erreur cible en se référant aux données de caractéristiques de taux d'erreur (20) fournissant des taux d'erreur lorsque l'on fait fonctionner ledit dispositif à différentes valeurs de tension d'alimentation et pour fournir une indication de ladite valeur de ladite tension d'alimentation audit régulateur de tension pour délivrer ladite valeur de ladite tension d'alimentation audit dispositif ; et
une logique de détermination de caractéristiques de taux d'erreur (10) permettant de déterminer lesdites données de caractéristiques de taux d'erreur en fournissant des données audit dispositif à différentes valeurs de ladite tension d'alimentation et en identifiant un taux d'erreur de données résultantes pour lesdites différentes valeurs de ladite tension d'alimentation.

2. Contrôleur de dispositif selon la revendication 1, dans lequel ledit régulateur de tension permet de fournir une tension d'alimentation audit dispositif permettant de fournir lesdites données résultantes sur un canal de transmission et ladite logique de commande de taux d'erreur permet de recevoir une indication d'un taux d'erreur cible pour les données résultantes fournies par ledit dispositif sur ledit canal de transmission et de déterminer une valeur de ladite tension d'alimentation pour ledit dispositif qui atteint ledit taux d'erreur cible de données résultantes fournies par ledit dispositif sur ledit canal de transmission.

3. Contrôleur de dispositif selon la revendication 1 ou 2, dans lequel ladite logique de commande de taux d'erreur permet de déterminer une valeur minimum de ladite tension d'alimentation qui atteint ledit taux d'erreur cible.

4. Contrôleur de dispositif selon l'une quelconque des revendications précédentes, dans lequel ledit régulateur de tension permet de fournir une tension d'alimentation à une pluralité de dispositifs (100 à 150) et ladite logique de commande de taux d'erreur permet de recevoir une indication d'un taux d'erreur cible pour les données résultantes fournies par ladite pluralité de dispositifs et de déterminer une valeur de ladite tension d'alimentation pour chacun parmi ladite pluralité de dispositifs qui atteint ledit taux d'erreur cible.

5. Contrôleur de dispositif selon l'une quelconque des revendications précédentes, dans lequel ledit régulateur de tension permet de fournir une tension d'alimentation à une pluralité de dispositifs séquentiels (100 à 150), chaque dispositif séquentiel fournissant des données résultantes à un dispositif séquentiel suivant, et ladite logique de commande de taux d'erreur permet de recevoir une indication d'un taux d'erreur cible pour les données résultantes fournies par ladite pluralité de dispositifs séquentiels et de déterminer une valeur de ladite tension d'alimentation pour chacun parmi ladite pluralité de dispositifs séquentiels qui atteint ledit taux d'erreur cible.

6. Contrôleur de dispositif selon la revendication 4 ou 5, dans lequel ledit régulateur de tension permet de déterminer une valeur de ladite tension d'alimentation pour chacun parmi ladite pluralité de dispositifs qui atteint ledit taux d'erreur cible et réduit au minimum la consommation d'énergie de ladite pluralité de dispositifs.

7. Contrôleur de dispositif selon l'une quelconque des revendications précédentes, dans lequel lesdites données de caractéristiques de taux d'erreur fournissent des taux d'erreur lorsque l'on fait fonctionner ledit dispositif à différentes valeurs de ladite tension d'alimentation à différentes températures.

8. Contrôleur de dispositif selon la revendication 1, dans lequel ladite logique de détermination de caractéristiques de taux d'erreur permet de déterminer lesdites données de caractéristiques de taux d'erreur en fournissant une pluralité de données audit dispositif pour re-traiter des données précédemment traitées et en identifiant un taux d'erreur en comparant chacune parmi une pluralité correspondante de données résultantes fournies par ledit dispositif.

9. Contrôleur de dispositif selon la revendication 1, dans lequel ladite logique de détermination de caractéristiques de taux d'erreur permet de déterminer lesdites données de caractéristiques de taux d'erreur en fournissant des données prédéterminées audit dispositif et en identifiant un taux d'erreur en comparant les données résultantes fournies par ledit dispositif aux données résultantes prédéterminées.

10. Contrôleur de dispositif selon l'une quelconque des revendications 2 à 9, dans lequel ladite logique de détermination de caractéristiques de taux d'erreur permet de déterminer lesdites données de caractéristiques de taux d'erreur à différentes températures.

11. Contrôleur de dispositif selon l'une quelconque des revendications 1 à 10, dans lequel ladite logique de détermination de caractéristiques de taux d'erreur permet de déterminer lesdites données de caractéristiques de taux d'erreur durant des périodes lorsque ledit dispositif est par ailleurs inactif.

12. Procédé de contrôle d'un dispositif, comprenant les étapes suivantes :
recevoir une indication d'un taux d'erreur cible de données résultantes devant être fournies par ledit dispositif en réponse aux données reçues ;
déterminer une valeur d'une tension d'alimentation fournie audit dispositif en fonction dudit taux d'erreur cible en se référant aux données de caractéristiques de taux d'erreur fournissant des taux d'erreur lorsque l'on fait fonctionner ledit dispositif à différentes valeurs de tension d'alimentation ;
délivrer ladite valeur de ladite tension d'alimentation audit dispositif ; et
déterminer lesdites données de caractéristiques de taux d'erreur en fournissant des données audit dispositif à différentes valeurs de ladite tension d'alimentation et identifier un taux d'erreur de données résultantes pour lesdites différentes valeurs de ladite tension d'alimentation.

13. Produit de programme informatique permettant, lorsqu'il est exécuté sur un ordinateur, de réaliser les étapes du procédé selon la revendication 12.
